# EUROPEAN PATENT SPECIFICATION

(11) **EP 3 101 317 B1**
(45) Date of publication and mention of the grant of the patent: **06.03.2019**
(21) Application number: 15743306.1
(22) Date of filing: 21.01.2015
(51) Int. Cl.: F04B 43/02, F04B 45/04, F04B 53/22, F16K 7/17

(54) **FLUID CONTROL DEVICE**
FLUIDSTEUERUNGSVORRICHTUNG
DISPOSITIF DE RÉGULATION DE FLUIDE

(30) Priority: 28.01.2014 JP 2014013102
(43) Date of publication of application: 07.12.2016
(73) Proprietor: Alps Electric Co., Ltd., Tokyo 145-8501 (JP)
(72) Inventor: ITO, Junko, Tokyo 145-8501 (JP); WATANABE, Yasushi, Tokyo 145-8501 (JP)
(74) Representative: Schmitt-Nilson Schraud Waibel Wohlfrom Patentanwälte Partnerschaft mbB
(86) International application number: PCT/JP2015/051539
(87) International publication number: WO 2015/115271

(56) References cited:
- JP-A- 2013 119 799
- JP-U- S6 451 781
- JP-U- S6 451 781
- JP-U- S59 186 558
- JP-U- S59 186 558
- US-A- 4 181 245
- US-A- 4 304 260
- US-A- 4 304 260
- US-A- 4 596 219
- US-A- 5 649 910
- US-A- 6 106 246

## Description

### Technical Field

The present invention relates to a fluid control device that constitutes a so-called micro flow path device, and more particularly to a fluid control device in which a film is sandwiched between two plates and part of the film forms a diaphragm part.

### Background Art

A micro flow path device is used in a reaction experiment or the like in which a small amount of fluid is used.

In a micro flow path device, a fine flow path is formed in a joined part of plates or the like. A plurality of micro flow path devices of this type are combined according to the application and are used. A fluid control device that exerts functions of a pump, a valve, or the like may be used.

In PTL 1 below, an invention related to a micro valve is disclosed as a fluid control device. In this micro valve, a thin silicone rubber film is sandwiched between a silicon wafer and a thick silicone rubber film. A conduit tube, which becomes a flow path, is formed in the thick silicone film. An opening part, which leads to the thin silicone film, is formed in the silicon wafer. When a positive pressure is given from a pressure source through the opening part to the thin silicone film, the conduit tube is blocked with the thin silicone film and a fluid flow in the conduit tube is interrupted.

### Citation List

### Patent Literature

PTL 1: Japanese Unexamined Patent Application Publication No. 2000-27813

### Summary of Invention

### Technical Problem

As for a micro flow path device, it is necessary to subtly control a fluid flow in a fine flow path. Therefore, if the micro valve described in PTL 1 or a device other than it, such as, for example, a pump is formed, it is necessary to stretch a film such as a thin silicone film between plates such as silicon wafers by giving a tension in such a way that warps or wrinkles are not caused. However, when a film is sandwiched between two plates, the film having a smaller area than the plates, it is very difficult to give an appropriate tension in such a way that warps or wrinkles are not caused on the film.

US 4 304 260 A shows a valve device for a metering unit with a planar sheet flexible diaphragm adapted to be formed in the area over the valve seat by placing the valve cover on the valve body with the flexible diaphragm therebetween. Means for forming the planar sheet flexible diaphragm over the valve area into an arcuate-shaped fluid channel portion are provided on the valve case.

The present invention solves the conventional problem described above. An object of the present invention is to provide a fluid control device that, when a film that forms a diaphragm part is sandwiched between two plates, can always give an appropriate tension to the film.

### Solution to Problem

In a fluid control device that has a first plate, a second plate, and a film sandwiched between the opposing surfaces of both plates, and in which a diaphragm part disposed opposite to flow paths formed in the first plate and second plate is formed, the diaphragm part being part of the film, the present invention is characterized in that:
with the first plate, a first plane that abuts the film and a concave part that is positioned outside the diaphragm part and is recessed from the first plane are formed, and with the second plate, a second plane that abuts the film and a convex part that is disposed opposite to the concave part and protrudes from the second plane are formed, part of the film being sandwiched at a fitting part between the concave part and the convex part; and
at the fitting part between the concave part and the convex part, a film restricting part is structured at a position distant from the diaphragm part, and a film tension setting part is structured at a position closer to the diaphragm part than the film restricting part is, the film restricting part having a stronger holding force for the film than the film tension setting part.

In the present invention, an outer concave part and an inner concave part, which is closer to the diaphragm part than the outer concave part is, are formed in the first plate, an outer convex part disposed opposite to the outer concave part and an inner convex part disposed opposite to the inner concave part are formed on the second plate, and the protrusion dimension of the outer convex part from the second plane is larger than the protrusion dimension of the inner convex part from the second plane.

The first film restricting part is formed by a fitting part between the outer concave part and the outer convex part, and the film tension setting part is formed by a fitting part between the inner concave part and the outer concave part.

In addition, with the fluid control device in the present invention, the concave part has an inner wall surface oriented toward the diaphragm part and an outer wall surface oriented opposite to this, an interval between the outer wall surface and the inner surface of the concave part being formed so as to be narrower than an interval between the inner wall surface and the inner surface of the concave part.

The film restricting part is formed by the outer wall surface and the inner surface of the concave part, and the film tension setting part is formed by the inner wall surface and the inner surface of the concave part.

Alternatively, the inner convex part has an inner wall surface oriented toward the diaphragm part and an outer wall surface oriented opposite to this, an interval between the outer wall surface and the inner surface of the inner concave part being formed so as to be narrower than an interval between the inner wall surface and the inner surface of the inner concave part.

The film restricting part is formed by the outer wall surface and the inner surface of the inner concave part, and the film tension setting part is formed by the inner wall surface and the inner surface of the inner concave part.

In the present invention, the film preferably has an adhesion for the first surface and second surface.

### Advantageous Effects of Invention

The fluid control device in the present invention can stretch the diaphragm part of a film facing flow paths under an appropriate tension in a state in which there is no warp or wrinkle just by sandwiching the film between two plates and joining the two plates together.

### Brief Description of Drawings

Fig. 1 is a plan view that indicates a fluid control device in a first embodiment of the present invention.
Fig. 2 is a cross-sectional view that indicates a state in which the fluid control device indicated in Fig. 1 is separated above and below.
Fig. 3, which indicates a state in which the fluid control device is joined, is a cross-sectional view obtained by cutting Fig. 1 along line III-III.
Fig. 4 is an enlarged cross-sectional view of a portion indicated by arrow IV in Fig. 2.
Fig. 5 is a plan view that indicates a fluid control device in a second embodiment of the present invention.

### Description of Embodiments

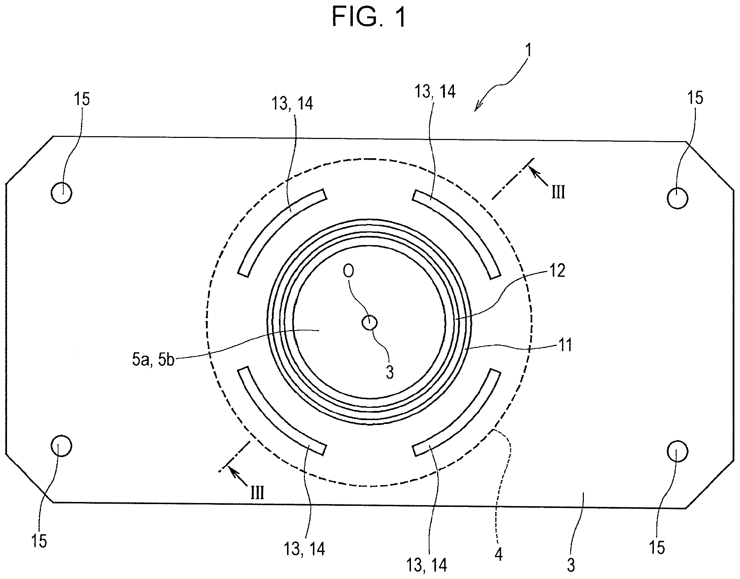

A fluid control device 1, indicated in Fig. 1 to Fig. 4, in a first embodiment of the present invention forms part of a micro flow path device and is used to control the flow rate of a fluid.

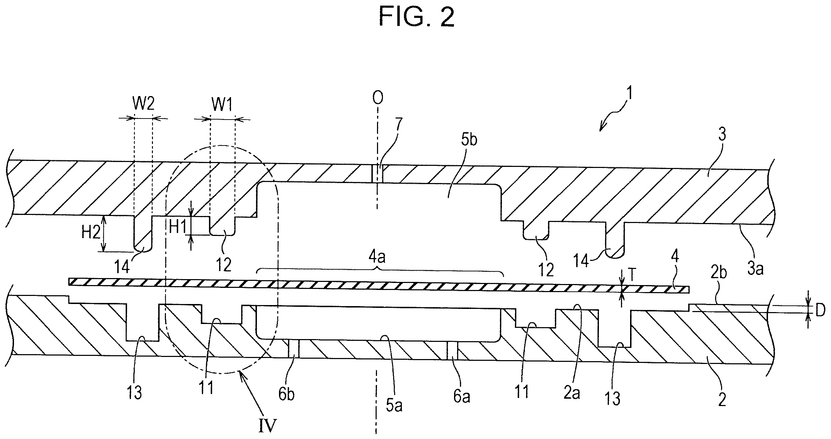

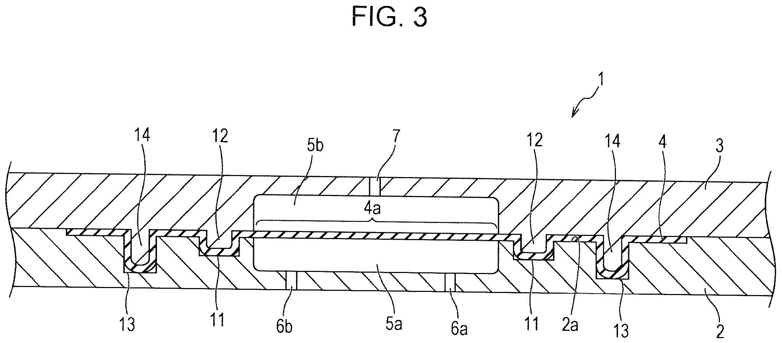

As indicated in Fig. 2 and Fig. 3, the fluid control device 1 has a first plate 2, a second plate 3, and a film 4, which is sandwiched between both the plates 2 and 3. The first plate 2 and second plate 3 are made of a cycloolefin polymer (COP) resin. The film 4 is made of a resin material, such as a silicone resin, that has a flexibility and elasticity and the surface of which has a slight adhesion.

The fluid control device 1 is used in a reaction experiment in biological chemistry and the like. Therefore, the first plate 2, second plate 3, and film 4 are held with holding metal fittings or the like in a state in which face joining is performed as indicated in Fig. 3 without an adhesive being used, and are used.

With the first plate 2, a joining plane 2b and a first plane 2a, which is formed so as to be one step lower than this joining plane 2b, are formed as indicated in Fig. 2 and Fig. 3. The first plane 3a is formed in the same area as the shape of the film 4 (circular shape), and the depth dimension D of the step between the first plane 2a and the joining plane 2b is formed so as to be the same as or slightly shallower than the thick dimension T of the film 4. The lower surface, in the drawing, of the film 4 is disposed on the first plane 2a.

With the second plate 3, a second plane 3a is formed. When the first plate 2 and second plate 3 are face-joined together in a state in which the film 4 is sandwiched, the second plane 3a is face-joined to the joining plane 2b of the first plate 2 and abuts the upper surface, in the drawing, of the film 4. The film 4 is sandwiched between the first plane 2a and the second plane 3a and is held.

A first concave flow path 5a is formed in the central portion of the first plate 2. The first concave flow path 5a is formed so as to be recessed from the first plane 2a. A second concave flow path 5b recessed from the second plane 3a is formed in the central portion of the second plate 3 as well. When the first plate 2 and second plate 3 are combined together, the first concave flow path 5a and second concave flow path 5b face to each other. The planar shapes of both the concave flow paths 5a and 5b are circular, as indicated in Fig. 1.

As indicated in Fig. 3, part of the film 4 sandwiched between the first plate 2 and the second plate 3 is a diaphragm part 4a positioned on a boundary between the first concave flow path 5a and the second concave flow path 5b. The diaphragm part 4a is disposed opposite to (face) both the first concave flow path 5a and second concave flow path 5b.

A pair of communicating flow paths 6a and 6b, which communicate with the first concave flow path 5a, are formed in the first plate 2, and a communicating flow path 7, which communicates with the second concave flow path 5b, is formed in the second plate 3. A lower plate is face-joined to the lower surface of the first plate 2, and flow paths communicating with each of the communicating flow paths 6a and 6b are formed between the first plate 2 and the lower plate. An upper plate is face-joined to the upper surface of the second plate 3, and a flow path communicating with the communicating flow path 7 is formed between the second plate 3 and the upper plate.

Outside the first concave flow path 5a and second concave flow path 5b and on an outer circumferential side more outward than the diaphragm part 4a, an inner concave part 11 recessed from the first plane 2a is formed in the first plate 2 and an inner convex part 12 protruding from the second plane 3a is formed on the second plate 3, as indicated in Fig. 2 and Fig. 3. The inner concave part 11 and inner convex part 12 are in a shape like a ring that is continuous so as to enclose the whole of the circumferences of the first concave flow path 5a and second concave flow path 5b, as indicated in Fig. 1. When the first plate 2 and second plate 3 are face-joined together, the outer circumferential part, of the film 4, that encloses the diaphragm part 4a is sandwiched between the inner concave part 11 and the inner convex part 12.

On an outer circumferential side further more outward than the inner concave part 11 and inner convex part 12, outer concave parts 13 recessed from the first plane 2a are formed in the first plate 2 and outer convex parts 14 protruding from the second plane 3a are formed on the second plate 3. The planar shapes of the outer concave part 13 and outer convex part 14 are a partial arc, as indicated in Fig. 1. The outer concave parts 13 and outer convex parts 14 are disposed at equal positional intervals with respect to the center O of the first concave flow path 5a and second concave flow path 5b, that is, at intervals of an equal angle with respect to the center O. When the first plate 2 and second plate 3 are face-joined together, a part of the film 4, the part being on a further outer circumferential side, is sandwiched between the outer concave parts 13 and the outer convex parts 14.

As indicated in Fig. 2, the protrusion dimension H2 of the outer convex part 14 from the second plane 3a is larger than the protrusion dimension H1 of the inner convex part 12 from the second plane 3a. In addition, the width dimension W2 of the outer convex part 14 is formed so as to be smaller than the width dimension W1 of the inner convex part 12. The width dimensions W1 and W2 described here are dimensions from the center O in a radius direction. To match this, the outer concave part 13 is formed so as to be deeper than the inner concave part 11, and the outer concave part 13 is formed so that the dimension of the width of the opening is smaller than the dimension of the width of the opening in the inner concave part 11.

A first film restricting part is formed by the structure of fitting between the outer concave parts 13 and the outer convex parts 14, and a second film tension setting part is formed by the structure of fitting between the inner concave part 11 and the inner convex part 12.

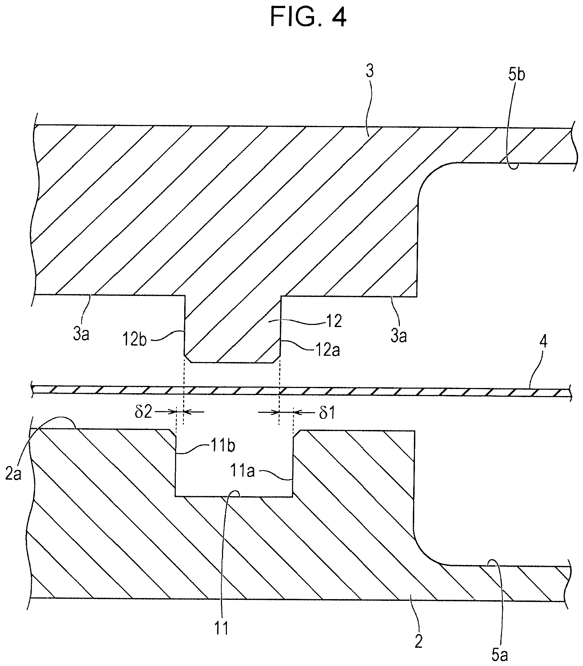

The inner concave part 11 and inner convex part 12 are indicated in Fig. 4, in which they are enlarged. The inner convex part 12 has an inner wall surface 12a oriented toward the first concave flow path 5a and second concave flow path 5b and an outer wall surface 12b oriented toward the outer circumferential side opposite to this. The first plate 2 and second plate 3 are joined together by being mutually positioned with respect to positioning holes 15 formed at a plurality of positions, as indicated in Fig. 1. In Fig. 4, an interval between the inner wall surface 12a of the inner convex part 12 and the inner-side inner surface 11a of the inner concave part 11 when the first plate 2 and second plate 3 are positioned is indicated by δ1, and an interval between the outer wall surface 12b of the inner convex part 12 and the outer-side inner surface 11b of the inner concave part 11 is indicated by δ2. The intervals δ1 and δ2 described here mean interval dimensions from the center O in a radius direction.

At a fitting part between the inner concave part 11 and inner convex part 12, a second film restricting part is formed by the outer wall surface 12b and outer-side inner surface 11b, and a second film tension setting part is formed by the inner wall surface 12a and inner-side inner surface 11a.

The fluid control device 1 is assembled as described below.

As indicated in Fig. 2, the circular film 4 is placed on the first plane 2a of the first plate 2 and the second plate 3 is joined from above the film 4. The first plate 2 and second plate 3 are mutually positioned by the positioning holes 15 and are further face-joined together while a mutually parallel state is maintained.

Since the protrusion height dimension H2 of the outer convex part 14 is larger than the protrusion height dimension H1 of the inner convex part 12 as indicated from Fig. 2 to Fig. 3, the film 4 is first sandwiched between the outer concave parts 13 and the outer convex parts 14 and is then sandwiched between the inner concave part 11 and the inner convex part 12. The protrusion height dimension h2 of the outer convex part 14 is larger than the inner convex part 12 and the width dimension W2 of the outer convex part 14 is smaller than the width dimension W1 of the inner convex part 12. Therefore, a holding force for the film 4 at a fitting part of the outer concave part 13 and outer convex part 14 is stronger than the holding force for the film at the fitting part of the inner concave part 11 and inner convex part 12.

During a time while the first plate 2 and second plate 3 are joined together, the film 4 is sandwiched between the outer concave parts 13 and the outer convex parts 14, which are the first film restricting part, after which the film 4 is sandwiched between the inner concave part 11 and the inner convex part 12, which are the first film tension setting part. Since the inner concave part 11 and inner convex part 12 are fitted to each other in a state in which the film 4 is sandwiched between the outer concave parts 13 and the outer convex parts 14 and sliding in the direction toward the center O is restricted, a tension is reliably given to the film 4 by the inner concave part 11 and inner convex part 12. Therefore, at an intermediate point between the first concave flow path 5a and the second concave flow path 5b, the diaphragm part 4a, which is part of the film 4, can be stretched with a strong tension without warps or wrinkles being generated.

At the fitting part between the inner concave part 11 and the inner convex part 12, the clearance δ2 between the outer wall surface 12b of the inner convex part 12 and the outer-side inner surface 11b of the inner concave part 11 is narrow and the clearance δ1 between the inner wall surface 12a and the inner-side inner surface 11a is wide, as indicated in Fig. 4. Therefore, when the inner convex part 12 and inner concave part 11 are fitted to each other, a holding force for the film 4 by the outer wall surface 12b and outer-side inner surface 11b becomes larger than a holding force by the inner wall surface 12a and inner-side inner surface 11a.

Therefore, when the inner convex part 12 enters the inner concave part 11, the film 4 is sandwiched between the outer wall surface 12b and the outer-side inner surface 11b, which are the second film restricting part, and the film 4 is sandwiched between a part from the top face of the inner convex part 12 to the inner wall surface 12a, which is the second film tension setting part, and a part from the bottom face of the inner concave part 11 to the inner-side inner surface 11a in a state in which sliding in a direction toward the center O is restricted, so a strong tension is given to the diaphragm part 4a without warps or wrinkles being generated.

Particularly, if the film 4 is formed of a resin the surface of which has a slight adhesion like a silicone thin film, the film 4 is pasted to the first plane 2a of the first plate 2 and is held. With both forces of a holding force due to this adhesive force and the holding force by the outer wall surface 12b and outer-side inner surface 11b, the film 4 is firmly held and, when the inner convex part 12 enters the inner concave part 11, the film 4 is less likely to deviate toward the center O. Therefore, when the film 4 is sandwiched between the inner wall surface 12a and the inner-side inner surface 11a, it is possible to give a strong tensile strength to the diaphragm part 4a.

The fluid control device 1 structured so that the film 4 is sandwiched between the first plate 2 and the second plate 3 as indicated in Fig. 1 and Fig. 3 is used as, for example, a micro pump. In this case, the communicating flow path 6a formed in the first plate 2 functions as an intake port of a fluid and the communicating flow path 6b functions as an exhaust port of the fluid. A positive pressure and a negative pressure are given from the communicating flow path 7 formed in the second plate 3 to the interior of the second concave flow path 5b, and a pressurizing force is repeatedly given to the second concave flow path 5b by the diaphragm part 4a. Due to this operation, the fluid guided from the communicating flow path 6a to the first concave flow path 5a is exhausted from the communicating flow path 6b to the outside.

In addition, the fluid control device 1 can be used as a micro valve. When a positive pressure is given from the communicating flow path 7 formed in the second plate 3 to the interior of the second concave flow path 5b by a fluid, the communicating flow paths 6a and 6b are blocked by the diaphragm part 4a and the flow of the fluid in the communicating flow paths 6a and 6b is interrupted. When the interior of the second concave flow path 5b is depressurized, the flow of the fluid in the communicating flow path 6a and 6b is resumed.

In addition, if the fluid pressure in the second concave flow path 5b is kept constant, it is also possible to keep the pressure of the fluid flowing in the communicating flow paths 6a and 6b constant.

In the embodiment described above, the first film restricting part is formed by the outer convex part 14 and the first film tension setting part is formed by the inner convex part 12. In addition, the second film restricting part is formed by the outer wall surface 12b of the inner convex part and the second film tension setting part is formed by the inner wall surface 12a, as indicated in Fig. 4.

In the present invention, however, only the first film restricting part and first film tension setting part may be provided and the second film restricting part and second film tension setting part indicated in Fig. 4 may not be provided. By contrast, only the second film restricting part and second film tension setting part indicated in Fig. 4 may be provided and the first film restricting part and first film tension setting part may not be provided.

In addition, the planar shapes of the outer concave part 13 and outer convex part 14 may not be a partial arc as in Fig. 1, but may be continuous in a ring shape.

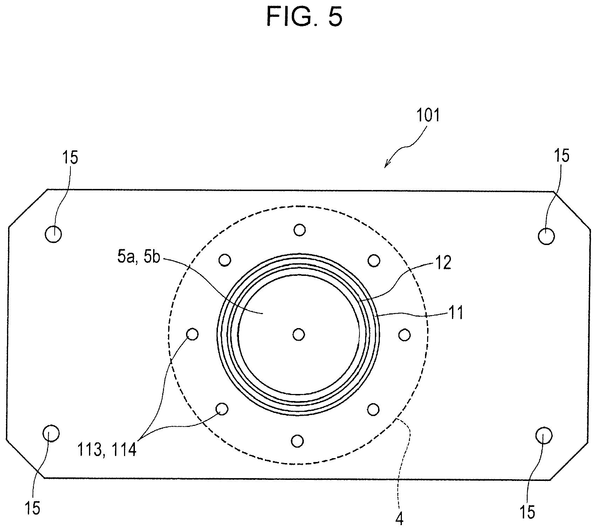

Furthermore, as with a fluid control device 101 in a second embodiment indicated in Fig. 5, the planner shapes may be such that the cross-sections of outer concave parts 113 and outer convex parts 114 are circular and they may be disposed at intervals of an equal angle with respect to the center O.

### Reference Signs List

1 fluid control device
2 first plate
2a first plane
3 second plate
3a second plane
4 film
4a diaphragm part
5a first concave flow path
5b second concave flow path
6a, 6b communicating flow path
11 inner concave part
11a inner-side inner surface
11b outer-side inner surface
12 inner convex part (first film tension setting part)
12a inner wall surface (second film tension setting part)
12b outer wall surface (second film restricting part)
13 outer concave part
14 outer convex part (first film restricting part)

## Claims

1. A fluid control device (1) that has a first plate (2), a second plate (3), and a film (4) sandwiched between opposing surfaces of both plates (2,3), and in which a diaphragm part (4a) disposed opposite to flow paths formed in the first plate (2) and second plate (3) is formed, the diaphragm part (4a) is part of the film (4), wherein:
with the first plate (2), a first plane (2a) that abuts the film (4) and a concave part (11,13) that is positioned outside the diaphragm part (4a) and is recessed from the first plane (2a) are formed, and with the second plate (3), a second plane (3a) that abuts the film (4a) and a convex part (12,14) that is disposed opposite to the concave part (11,13) and protrudes from the second plane (3a) are formed, part of the film (4) being sandwiched at a fitting part between the concave part (11,13) and the convex part (12,14);
**characterized in that**
at the fitting part between the concave part (11,13) and the convex part (12,14), a film restricting part is structured at a position distant from the diaphragm part (4a), and a film tension setting part is structured at a position closer to the diaphragm part (4a) than the film restricting part is, the film restricting part having a stronger holding force for the film (4) than the film tension setting part.

2. The fluid control device (1) according to claim 1, wherein:
an outer concave part (13) and an inner concave part (11), which is closer to the diaphragm part (4a) than the outer concave part (13) is, are formed in the first plate (2), an outer convex part (14) disposed opposite to the outer concave part (13) and an inner convex part (12) disposed opposite to the inner concave part (11) are formed on the second plate (3), and a protrusion dimension of the outer convex part (14) from the second plane (3a) is larger than a protrusion dimension of the inner convex part (12) from the second plane (3a); and
the first film restricting part is formed by a fitting part between the outer concave part (13) and the outer convex part (14), and the film tension setting part is formed by a fitting part between the inner concave part (11) and the inner convex part (12).

3. The fluid control device (1) according to claim 1, wherein:
the convex part (12,14) has an inner wall surface (12a) oriented toward the diaphragm part (4a) and an outer wall surface (12b) oriented opposite to this, a clearance (δ2) between the outer wall surface (12b) and an outer-side inner surface (11b) of the concave part (11,13) being formed so as to be narrower than a clearance (δ1) between the inner wall surface (12a) and an inner-side inner surface (11a) of the concave part (11,13); and
the film restricting part is formed by the outer wall surface (12b) and the outer-side inner surface (11b) of the concave part (11,13), and the film tension setting part is formed by the inner wall surface (12a) and the inner-side inner surface (11a) of the concave part (11,13).

4. The fluid control device (1) according to claim 2, wherein:
the inner convex part (12) has an inner wall surface (12a) oriented toward the diaphragm part (4a) and an outer wall surface (12b) oriented opposite to this, a clearance (δ2) between the outer wall surface (12b) and an outer-side inner surface (11b) of the inner concave part (11) being formed so as to be narrower than a clearance (δ1) between the inner wall surface (12a) and an inner-side inner surface (11a) of the inner concave part (11); and
the film restricting part is formed by the outer wall surface (12b) and the outer-side inner surface (11b) of the inner concave part (11), and the film tension setting part is formed by the inner wall surface (12a) and the inner-side inner surface (11a) of the inner concave part (11).

5. The fluid control device (1) according to any one of claims 1 to 4, wherein the film (4) has an adhesion for the first surface (2a) and the second surface (3a).

6. The fluid control device according to claim 2, wherein a width dimension (W2) of the outer convex part (14) is smaller than a width dimension (W1) of the inner convex part (12).

7. The fluid control device according to claim 2, wherein the outer concave part (13) is formed to be deeper than the inner concave part (11), and the outer concave part (13) is formed such that a width of an opening of the outer concave part (13) is smaller than a width of an opening of the inner concave part (11).

## Patentansprüche

1. Fluidsteuervorrichtung (1), die eine erste Platte (2), eine zweite Platte (3) und einen Film (4) aufweist, der zwischen gegenüberliegenden Oberflächen der beiden Platten (2, 3) angeordnet sind, und in der ein Membranteil (4a) gebildet ist, der gegenüber von in der ersten Platte (2) und der zweiten Platte (3) gebildeten Strömungspfaden angeordnet ist, wobei der Membranteil (4a) Teil des Films (4) ist, wobei:
an der ersten Platte (2) eine erste Ebene (2a), die an dem Film (4) anliegt, und ein konkaver Teil (11, 13) gebildet sind, der außerhalb des Membranteils (4a) positioniert ist und von der ersten Ebene (2a) vertieft ist, und an der zweiten Platte (3) eine zweite Ebene (3a), die an dem Film (4a) anliegt, und ein konvexer Teil (12, 14) gebildet sind, der gegenüber dem konkaven Teil (11, 13) angeordnet ist und von der zweiten Ebene (3a) hervorsteht, wobei ein Teil des Films (4) an einem Passbereich zwischen dem konkaven Teil (11, 13) und dem konvexen Teil (12, 14) sandwichartig angeordnet ist;
**dadurch gekennzeichnet,**
**dass** an dem Passbereich zwischen dem konkaven Teil (11, 13) und dem konvexen Teil (12, 14) ein Filmfestlegungsteil an einer von dem Membranteil (4a) abgelegenen Stelle gebildet ist und ein Filmspannungs-Einstellteil an einer Stelle gebildet ist, die näher bei dem Membranteil (4a) liegt als der Filmfestlegungsteil, wobei der Filmfestlegungsteil eine stärkere Haltekraft für den Film (4) als der Filmspannungs-Einstellteil aufweist.

2. Fluidsteuervorrichtung (1) nach Anspruch 1, wobei:
ein äußerer konkaver Teil (13) und ein innerer konkaver Teil (11), der sich näher bei dem Membranteil (4a) befindet als der äußere konkave Teil (13), in der ersten Platte (2) gebildet sind, wobei ein äußerer konvexer Teil (14), der dem äußeren konkaven Teil (13) gegenüberliegend angeordnet ist, und ein innerer konvexer Teil (12), der dem inneren konkaven Teil (11) gegenüberliegend angeordnet ist, an der zweiten Platte (3) gebildet sind, und ein Vorsprungsmaß des äußeren konvexen Teils (14) von der zweiten Ebene (3a) größer ist als ein Vorsprungsmaß des inneren konvexen Teils (12) von der zweiten Ebene (3a); und
wobei der erste Filmfestlegungsteil durch einen Passbereich zwischen dem äußeren konkaven Teil (13) und dem äußeren konvexen Teil (14) gebildet ist und der Filmspannungs-Einstellteil durch einen Passbereich zwischen dem inneren konkaven Teil (11) und dem inneren konvexen Teil (12) gebildet ist.

3. Fluidsteuervorrichtung (1) nach Anspruch 1, wobei:
der konvexe Teil (12, 14) eine Innenwandfläche (12a) aufweist, die zum Membranteil (4a) orientiert ist, und eine Außenwandfläche (12b) aufweist, die entgegengesetzt orientiert ist, wobei ein Abstand (δ2) zwischen der Außenwandfläche (12b) und einer außenseitigen Innenfläche (11b) des konkaven Teils (11, 13) derart ausgebildet ist, dass er schmaler als ein Abstand (δ1) zwischen der Innenwandfläche (12a) und einer innenseitigen Innenfläche (11a) des konkaven Teils (11, 13) ist; und
wobei der Filmfestlegungsteil durch die Außenwandfläche (12b) und die außenseitige Innenfläche (11b) des konkaven Teils (11, 13) gebildet ist und der Filmspannungs-Einstellteil durch die Innenwandfläche (12a) und die innenseitige Innenfläche (11a) des konkaven Teils (11, 13) gebildet ist.

4. Fluidsteuervorrichtung (1) nach Anspruch 2, wobei:
der innere konvexe Teil (12) eine Innenwandfläche (12a) aufweist, die zum Membranteil (4a) orientiert ist, und eine Außenwandfläche (12b) aufweist, die entgegengesetzt orientiert ist, wobei ein Abstand (δ2) zwischen der Außenwandfläche (12b) und einer außenseitigen Innenfläche (11b) des inneren konkaven Teils (11) derart ausgebildet ist, dass er schmaler als ein Abstand (δ1) zwischen der Innenwandfläche (12a) und einer innenseitigen Innenfläche (11a) des inneren konkaven Teils (11) ist; und
wobei der Filmfestlegungsteil durch die Außenwandfläche (12b) und die außenseitige Innenfläche (11b) des inneren konkaven Teils (11) gebildet ist und der Filmspannungs-Einstellteil durch die Innenwandfläche (12a) und die innenseitige Innenfläche (11a) des inneren konkaven Teils (11) gebildet ist.

5. Fluidsteuervorrichtung (1) nach einem der Ansprüche 1 bis 4,
wobei der Film (4) Haftung für die erste Oberfläche (2a) und die zweite Oberfläche (3a) aufweist.

6. Fluidsteuervorrichtung nach Anspruch 2,
wobei eine Breitenabmessung (W2) des äußeren konvexen Teils (14) kleiner ist als eine Breitenabmessung (W1) des inneren konvexen Teils (12).

7. Fluidsteuervorrichtung nach Anspruch 2,
wobei der äußere konkave Teil (13) tiefer ausgebildet ist als der innere konkave Teil (11) und der äußere konkave Teil (13) derart ausgebildet ist, dass eine Breite einer Öffnung des äußeren konkaven Teils (13) kleiner ist als eine Breite einer Öffnung des inneren konkaven Teils (11).

## Revendications

1. Dispositif de régulation de fluide (1) qui possède une première plaque (2), une deuxième plaque (3) et un film (4) intercalé entre les surfaces opposées des deux plaques (2, 3), et dans lequel un élément (4a) faisant office de diaphragme est réalisé, qui est disposé à l'opposé de voies d'écoulement réalisées dans la première plaque (2) et dans la deuxième plaque (3), l'élément (4a) faisant office de diaphragme faisant partie du film (4) ; dans lequel
avec la première plaque (2), sont réalisés un premier plan (2a) qui vient en butée contre le film (4) et un élément de forme concave (11, 13) qui vient se disposer à l'extérieur de l'élément (4a) faisant office de diaphragme et qui est évidé par rapport au premier plan (2a), et avec la deuxième plaque (3), sont réalisés un deuxième plan (3a) qui vient en butée contre le film (4) et un élément de forme convexe (12, 14) qui vient se disposer à l'opposé de l'élément de forme concave (11, 13) et qui fait faillite par rapport au deuxième plan (3a), une partie du film (4) venant s'intercaler à un élément faisant office de raccord entre l'élément de forme concave (11, 13) et l'élément de forme convexe (12, 14) ;
**caractérisé en ce que**
à l'élément faisant office de raccord entre l'élément de forme concave (11, 13) et l'élément de forme convexe (12, 14), un élément destiné à restreindre le film est structuré à un endroit distant de l'élément (4a) faisant office de diaphragme et un élément de réglage de la tension du film est structuré à un endroit qui est plus proche de l'élément (4a) faisant office de diaphragme que ne l'est l'élément destiné à restreindre le film, l'élément destiné à restreindre le film possédant une force de maintien pour le film (4) plus intense que celle de l'élément de réglage de la tension du film.

2. Dispositif de régulation de fluide (1) selon la revendication 1, dans lequel :
un élément externe (13) de forme concave et un élément interne (11) de forme concave, qui est plus proche de l'élément (4a) faisant office de diaphragme que ne l'est l'élément externe (13) de forme concave sont réalisés dans la première plaque (2), un élément externe de forme convexe (14) disposé à l'opposé de l'élément externe de forme concave (13) et un élément interne de forme convexe (12) disposé à l'opposé de l'élément interne de forme concave (11) sont réalisés sur la deuxième plaque (3), et une dimension correspondant à une partie saillante de l'élément externe de forme convexe (14) par rapport au deuxième plan (3a) est supérieure à une dimension correspondant à une partie saillante de l'élément interne de forme convexe (12) par rapport au deuxième plan (3a) ; et
le premier élément destiné à restreindre le film est réalisé via un élément de raccord entre l'élément externe de forme convexe (13) et l'élément externe de forme convexe (14), et l'élément de réglage de la tension du film est réalisé via un élément de raccord entre l'élément interne de forme concave (11) et l'élément interne de forme convexe (12).

3. Dispositif de régulation de fluide (1) selon la revendication 1, dans lequel :
l'élément de forme convexe (12, 14) possède une surface de paroi interne (12a) orientée en direction de l'élément (4a) faisant office de diaphragme et une surface de paroi externe (12b) orientée à l'opposé de ladite direction, un espace libre (δ2) entre la surface de paroi externe (12b) et une surface interne (11b), côté externe, de l'élément de forme concave (11, 13) est réalisé d'une manière telle qu'il est plus étroit qu'un espace libre (δ1) entre la surface de paroi interne (12a) et une surface interne (11a), côté interne, de l'élément de forme concave (11, 13) ; et
l'élément destiné à restreindre le film est réalisé par la surface de paroi externe (12b) et la surface interne (11b), côté externe, de l'élément de forme concave (11, 13), et l'élément de réglage de la tension du film est réalisé par la surface de paroi interne (12a) et la surface interne (11a), côté interne, de l'élément de forme concave (11, 13).

4. Dispositif de régulation de fluide (1) selon la revendication 2, dans lequel :
l'élément interne de forme convexe (12) possède une surface de paroi interne (12a) orientée en direction de l'élément (4a) faisant office de diaphragme et une surface de paroi externe (12b) orientée à l'opposé de ladite direction, un espace libre (δ2) entre la surface de paroi externe (12b) et une surface interne (11b), côté externe, de l'élément interne de forme concave (11) est réalisé d'une manière telle qu'il est plus étroit qu'un espace libre (δ1) entre la surface de paroi interne (12a) et une surface interne (11a), côté interne, de l'élément interne de forme concave (11) ; et
l'élément destiné à restreindre le film est réalisé par la surface de paroi externe (12b) et la surface interne (11b), côté externe, de l'élément interne de forme concave (11), et l'élément de réglage de la tension du film est réalisé par la surface de paroi interne (12a) et la surface interne (11a), côté interne, de l'élément interne de forme concave (11).

5. Dispositif de régulation de fluide (1) selon l'une quelconque des revendications 1 à 4, dans lequel le film (4) possède une adhérence pour la première surface (2a) et la deuxième surface (3a).

6. Dispositif de régulation de fluide (1) selon la revendication 2, dans lequel une dimension en largeur (W2) de l'élément externe de forme convexe (14) est inférieure à une dimension en largeur (W1) de l'élément interne de forme convexe (12).

7. Dispositif de régulation de fluide (1) selon la revendication 2, dans lequel l'élément externe de forme concave (13) est réalisé pour être plus profond que l'élément interne de forme concave (11), et l'élément externe de forme concave (13) est réalisé d'une manière telle qu'une largeur d'une ouverture de l'élément externe de forme concave (13) est inférieure à une largeur d'une ouverture de l'élément interne de forme concave (11).
